# EUROPÄISCHE PATENTSCHRIFT

(11) **EP 1 395 425 B1**
(45) Veröffentlichungstag und Bekanntmachung des Hinweises auf die Patenterteilung: **02.05.2007**
(21) Anmeldenummer: 02748728.9
(22) Anmeldetag: 31.05.2002
(51) Int. Cl.: B32B 27/18, F16C 33/20

(54) **GLEITLAGERVERBUNDWERKSTOFF MIT EINER METALLISCHEN STÜTZSCHICHT**
COMPOSITE MATERIAL COMPRISING A METALLIC SUPPORT LAYER FOR USE IN SLIDE BEARINGS
MATERIAU COMPOSITE POUR PALIERS A GLISSEMENT, COMPRENANT UNE COUCHE SUPPORT METALLIQUE

(30) Priorität: 31.05.2001 DE 10126462
(43) Veröffentlichungstag der Anmeldung: 10.03.2004
(73) Patentinhaber: KS Gleitlager GmbH, 68789 St. Leon-Rot (DE)
(72) Erfinder: BICKLE, Wolfgang, 68799 Reilingen (DE); SCHUBERT, Werner, 69168 Wiesloch (DE); STORCH, Thomas, 68782 Brühl (DE)
(74) Vertreter: Friz, Oliver
(86) Internationale Anmeldenummer: PCT/EP2002/005994
(87) Internationale Veröffentlichungsnummer: WO 2002/096644

(56) Entgegenhaltungen:
- EP-A- 0 234 602
- DE-A- 3 343 697
- DE-A- 19 654 102
- US-A- 5 750 221

## Beschreibung

Die Erfindung betrifft einen Gleitlagerverbundwerkstoff mit einer metallischen Stützschicht, einer darauf aufgebrachten porösen Trägerschicht und einer eine Gleitfläche für einen Gleitpartner bildenden auf PTFE-Basis beruhenden Gleitschicht, wobei das die Gleitschicht bildende Gleitschichtmaterial auch die Poren der Trägerschicht ausfüllt und wenigstens 60 Vol.-% PTFE und 10 - 25 Vol.-% Zinksulfid umfasst.

Ein derartiger Gleitlagerverbundwerkstoff ist beispielsweise aus EP 0 232 922 B1 bekannt. Zwar ist dort ein Mindestgehalt von 60 Vol.-% PTFE nicht erwähnt. Die Anmelderin fertigt jedoch seit langem einen Gleitlagerverbundwerkstoff bestehend aus 75 Vol.-% PTFE und 25 Vol.-% ZnS. In der genannten Patentschrift findet sich noch der Hinweis, dass als Füllstoffe zusätzlich 5 bis 40 Vol.-% Aramidfasern, Carbonfasern, Glasfasern enthalten sein können.

EP 0 708 892 B1 offenbart einen nicht gattungsgemäßen Gleitlagerverbundwerkstoff, dessen Gleitschichtmaterial PTFE und 2 bis 20 Vol.-% fibrillierter Aramidfasern umfasst. Die Ausführungsbeispiele umfassen neben PTFE noch PPS bzw. PFA bzw. Calciumfluorid in verschiedenen Anteilen. Weitere Hinweise lassen sich dieser Druckschrift nicht entnehmen.

WO 99/45285 offenbart einen nicht gattungsgemäßen Gleitlagerverbundwerkstoff, dessen Gleitschichtmaterial PTFE 10 bis 30 Vol.-% eines Metallfluorids, insbesondere Calciumfluorid, und 2 bis 10 % fibrillierte Aramidfasern sowie 2 bis 10 % eines schmelzbaren Fluorpolymers, FEP, PFA oder MFA, wobei FEP bevorzugt sei, umfassen soll. Konkret offenbart ist ein Ausführungsbeispiel mit 4 Vol.-% Aramidfasern, 7 Vol.-% FEP, 18 Vol.-% CaF, Rest PTFE.

WO 99/01675 offenbart einen Gleitlagerverbundwerkstoff, dessen Gleitschichtmaterial wenigstens 60 Vol.-% PTFE, 15 bis 25 Vol.-% eines metallischen Füllstoffs, vorzugsweise Blei, und insbesondere 8 bis 12 Vol.-% PVDF sowie 1 bis 3 Vol.-% in einer Vorzugsrichtung orientierte Kohlenstofffasern umfasst. Die Verwendung von metallischen Füllstoffen, insbesondere Blei, stößt jedoch zunehmend auf Ablehnung.

DE 693 27 377 T2 offenbart einen Gleitlagerverbundwerkstoff mit metallischer Stützschicht und poröser Trägerschicht und mit einer Gleitschicht, wobei das Gleitschichtmaterial als Hauptkomponente PTFE umfasst. Es ist ferner Zinkoxid-Whisker und Magnesiumoxysulfat vorgesehen, um die schlechte Verschleißbeständigkeit des PTFE zu verbessern. Nach einer Ausführungsvariante ist neben einer zur Auswahl stehenden Vielzahl weiterer Komponenten Zinksulfid erwähnt. Ein einziges Ausführungsbeipiel enthält PFA in der Zusammensetzung
65 Gew.-% PTFE, 15 Gew.-% Zinkoxid-Whisker, 5 Gew.-% MgO und 20 Gew.-% PFA

DE 33 43 697 A1 offenbart ebenfalls einen Gleitlagerverbundwerkstoff mit Stützschicht und Trägerschicht sowie einer Gleitschicht, deren Gleitschichtmaterial ein Gemisch aus den folgenden Komponenten aufweist: 0,1 bis 50 Vol.-% von mindestens einer Masse aus der Gruppe feste Schmiermittel, wie metallische Schmiermittel mit niedrigem Schmelzpunkt, wie Pb, Sn oder ihre Legierungen, Metalloxide, Metallsulfide, Metallfluoride, Graphit oder dergleichen, faserförmige Materialien, wie Kohlenstofffasern, und Keramika, wie SiC; und im Rest im wesentlichen PTFE, wobei die Gesamtmenge der Gehalte der Massen, ausgenommen PTFE, im Bereich von 0,2 bis 70 Vol.-% liegt.

Die Druckschrift DE 197 45 667 A1 erwähnt ein polymeres Beschichtungssystem, das auch für Gleitlageranwendungen in Frage kommt. Offenbart sind Zusammensetzungen, mit weniger als 40 Gew.-% PTFE und mehr als 30 Gew.-% PFA sowie mit 10 bzw- 20 Gew.-% PAI und PPSO₂ mit Gehalten von 2,5, 5, 10 bzw. 20 Gew.-%.

DE 197 28 131 A1 offenbart ein Implantatlager für den künstlichen Gelenkersatz beim Menschen, wobei als Füllstoff bei einem Basispolymer zum Beispiel PPSO₂ genannt ist. Als Basispolymer ist PTFE nicht genannt.

DE 196 54 102 A1 beschreibt Fluorpolymermischungen mit PTFE und PPSO₂, wobei Gleitlageranwendungen nicht genannt sind.

Hiervon ausgehend liegt der vorliegenden Erfindung die Aufgabe zugrunde, einen Gleitlagerverbundwerkstoff der eingangs genannten Art zu schaffen, der einen hohen Verschleißwiderstand und einen dennoch geringen Reibwert aufweist.

Diese Aufgabe wird bei einem gattungsgemäßen Gleitlagerverbundwerkstoff erfindungsgemäß dadurch gelöst, dass das Gleitschichtmaterial (10) desweiteren 2 - 7 Vol.-% PFA und 3 - 7 Vol.-% PPSO₂ aufweist.

Die Erhöhung des Verschleißwiderstands einerseits und die Beibehaltung eines geringen Reibwerts und damit die Erreichung von tribologisch geeigneten Eigenschaften sind in der Praxis gegenläufig zu erreichende Ziele. Beispielsweise hat ein Gleitlagerverbundwerkstoff allein auf PTFE-Basis einen hervorragenden Reibwert, der Verschleißwiderstand ist jedoch nicht zufriedenstellend und kann durch Zugabe von Füllstoffen, beispielsweise metallische Füllstoffe verbessert werden. Durch metallische Füllstoffe wird nämlich die Wärmeabführung verbessert und dadurch die Betriebstemperaturen geringer gehalten, was einen höheren Veschleißwiderstand bedeutet.

Des weiteren ist es - wie eingangs erwähnt - beispielsweise bekannt, zur Erhöhung des Reibwerts faserige Füllstoffe, insbesondere Carbon-Fasern zuzusetzen. Wenn jedoch der Carbon-Faseranteil hoch ist, insbesondere 4 Vol.-% und mehr beträgt, so wird hierdurch zwar der Verschleißwiderstand erhöht, der Reibwert wird aber stark beeinträchtigt. Ferner bringt die Zugabe von faserigen Füllstoffen das Problem mit sich, dass die Fasern nicht ohne weiteres in dem Gleitschichtmaterial gehalten oder verankert werden können und potentielle Ermüdungsstellen darstellen.

Mit der vorliegenden Erfindung wurde erkannt, dass optimale Ergebnisse auch ohne den Zusatz von faserförmigen Füllstoffen erzielt werden können. Es wurde festgestellt, dass durch den Zusatz von PPSO₂ als abriebfesterer Kunststoff eine Verschleißminderung also eine Erhöhung des Verschleißwiderstands erreicht werden kann. Die Fixierung oder Einbindung der PPSO₂-Partikel in die PTFE-Matrix wird durch PFA in hervorragender Weise unterstützt.

Nach einer bevorzugten Ausführungsform der Erfindung umfaßt das Gleitschichtmaterial 60 bis 80 Vol.-% PTFE, insbesondere 65 bis 80 Vol.-% PTFE und vorzugsweise 65 - 75 Vol.-% PTFE.

Nach einer weiteren Ausführungsform der Erfindung beträgt der Zinksulfid-Anteil 15 bis 20 Vol.-%.

Vorteilhafterweise ist die mittlere Korngröße der verwendeten Zinksulfid-Partikel, gemessen im Zentrifugenverfahren nach DIN ISO 9001, kleiner als 1 µm, vorzugsweise liegt sie zwischen 0,2 und 0,5 µm.

In weiterer Ausbildung der Erfindung wird vorgeschlagen, dass der Anteil des PFA 3 bis 7 Vol.-%, insbesondere 3 - 6 Vol.-% PFA und vorzugsweise 4 - 6 Vol.-% PFA beträgt.

In weiterer Ausbildung der Erfindung wird vorgeschlagen, dass der Anteil des PPSO₂ 3 bis 6 Vol.-%, vorzugsweise 4 - 6 Vol.-% beträgt.

Weitere Merkmale, Einzelheiten und Vorteile der Erfindung ergeben sich aus den Patentansprüchen und aus der nachfolgenden Beschreibung und zeichnerischen Darstellung einer bevorzugten Ausführungsform des erfindungsgemäßen Gleitlagerverbundwerkstoffs.

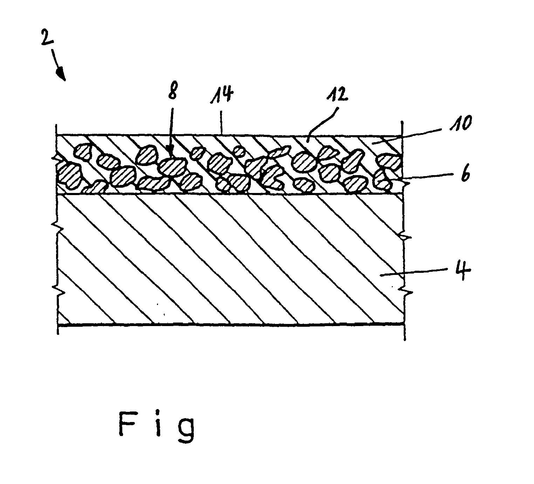

Die Figur zeigt einen insgesamt mit dem Bezugszeichen 2 bezeichneten Gleitlagerverbundwerkstoff mit einer metallischen Stützschicht 4 aus Stahl und einer darauf aufgebrachten porösen Trägerschicht 6, vorzugsweise aus einer bleifreien Bronzeschicht, beispielsweise mit 90 Gew.-% Kupfer und 10 Gew.-% Zinn. In die der Stützschicht 4 gegenüberliegende Oberseite 8 der Trägerschicht 6 ist ein Gleitschichtmaterial 10 in die Poren der Trägerschicht 6 eingebracht. Das Gleitschichtmaterial 10 steht geringfügig über die Oberseite 8 der Trägerschicht 6 vor und bildet eine Gleitschicht 12 mit einer Gleitfläche 14 für einen nicht dargestellten Gleitpartner. Das Gleitschichtmaterial 10 weist eine PTFE-Matrix mit wenigstens 60 Vol.-% PTFE und 10 bis 25 Vol.-% Zinksulfid und erfindungsgemäß 2 bis 7 Vol.-% PFA und 2 bis 7 Vol.-% PPSO₂ auf.

Eine bevorzugte Zusammensetzung des Gleitschichtmaterials umfasst 60 bis 80 Vol.-% Matrix bildendes PTFE, 10 bis 25 Vol.-% ZnS, 3 bis 7 Vol.-% PFA und 3 - 7, insbesondere 4 - 6 Vol.-% PPSO₂.

Das Gleitschichtmaterial besteht vorzugsweise aus den vorstehend genannten Komponenten.

Eine bevorzugte beispielhafte Zusammensetzung beträgt 70 Vol.-% PTFE, 20 Vol.-% ZnS, 5 Vol.-% PFA und 5 Vol.-% PPSO₂.

## Patentansprüche

1. Gleitlagerverbundwerkstoff (2) mit einer metallischen Stützschicht (4), einer darauf aufgebrachten porösen Trägerschicht (6) und einer eine Gleitfläche (14) für einen Gleitpartner bildenden auf PTFE-Basis beruhenden Gleitschicht (12), wobei das die Gleitschicht (12) bildende Gleitschichtmaterial (10) auch die Poren der Trägerschicht (6) ausfüllt und wenigstens 60 Vol.-% PTFE und 10 - 25 Vol.-% Zinksulfid umfasst,
**dadurch gekennzeichnet,**
**dass** das Gleitschichtmaterial (10) desweiteren 2 - 7 Vol.-% PFA und 3 - 7 Vol.-% PPSO₂ aufweist.

2. Gleitlagerverbundwerkstoff nach Anspruch 1, **dadurch gekennzeichnet, dass** das Gleitschichtmaterial (10) 60 - 80 Vol.-% PTFE umfasst.

3. Gleitlagerverbundwerkstoff nach Anspruch 2, **dadurch gekennzeichnet, dass** das Gleitschichtmaterial 65 - 80 Vol.-% PTFE umfasst.

4. Gleitlagerverbundwerkstoff nach Anspruch 1, 2 oder 3, **dadurch gekennzeichnet, dass** das Gleitschichtmaterial 15 - 20 Vol.-% Zinksulfid umfasst.

5. Gleitlagerverbundwerkstoff nach einem der vorstehenden Ansprüche, **dadurch gekennzeichnet, dass** das Gleitschichtmaterial 3 - 7 Vol.-% PFA umfasst.

6. Gleitlagerverbundwerkstoff nach einem der vorstehenden Ansprüche, **dadurch gekennzeichnet, dass** das Gleitschichtmaterial 3 - 6 Vol.-% PPSO₂ umfasst.

7. Gleitlagerverbundwerkstoff nach Anspruch 6, **dadurch gekennzeichnet, dass** das Gleitschichtmaterial 4 - 6 Vol.-% PPSO₂ umfasst.

## Claims

1. Sliding bearing composite material (2) with a metallic support layer (4), a porous carrier layer (6) disposed thereon, and a sliding layer (12) on the basis of PTFE which forms a sliding surface (14) for a sliding partner, wherein the sliding layer material (10) forming the sliding layer (12) also fills the pores of the carrier layer (6) and comprises at least 60 percent by volume of PTFE and 10 to 25 percent by volume of zinc sulfide,
**characterized in that**
the sliding layer material (10) comprises also 2 - 7 percent by volume of PFA and 3 - 7 percent by volume of PPSO₂.

2. Sliding bearing composite material according to claim 1, **characterized in that** the sliding layer material (10) comprises 60 to 80 percent by volume of PTFE.

3. Sliding bearing composite material according to claim 2, **characterized in that** the sliding layer material comprises 65 to 80 percent by volume of PTFE.

4. Sliding bearing composite material according to claim 1, 2 or 3, **characterized in that** the sliding layer material comprises 15 - 20 percent by volume of zinc sulfide.

5. Sliding bearing composite material according to any one of the preceding claims, **characterized in that** the sliding layer material comprises 3 to 7 % by volume of PFA.

6. Sliding bearing composite material according to any one of the preceding claims, **characterized in that** the sliding layer comprises 3 - 6 percent by volume of PPSO₂.

7. Sliding bearing composite material according to claim 6, **characterized in that** the sliding layer material comprises 4 to 6 % by volume of PPSO₂.

## Revendications

1. Matériau composite de palier à glissement (2) comportant une couche support métallique (4), une couche portante (6) poreuse apposée sur celle-ci et une surface de glissement (14) pour une couche de glissement (12) formant un partenaire de glissement, à base de PTFE, moyennant quoi le matériau de la couche de glissement (10) qui forme la couche de glissement (12) remplit également les pores de la couche portante (6) et comprend au moins 60 % en volume de PTFE et 10 à 25 % en volume de sulfure de zinc,
**caractérisé en ce que** le matériau de la couche de glissement (10) présente en outre 2 à 7 % en volume de PFA et 3 à 7 % en volume de PPSO₂.

2. Matériau composite de palier à glissement selon la revendication 1, **caractérisé en ce que** le matériau de la couche de glissement (10) comprend entre 60 et 80 % en volume de PTFE.

3. Matériau composite de palier à glissement selon la revendication 2, **caractérisé en ce que** le matériau de la couche de glissement comprend entre 65 et 80 % en volume de PTFE.

4. Matériau composite de palier à glissement selon la revendication 1, 2 ou 3, **caractérisé en ce que** le matériau de la couche de glissement comprend entre 15 et 20 % de sulfure de zinc.

5. Matériau composite de palier à glissement selon l'une quelconque des revendications précédentes, **caractérisé en ce que** le matériau de la couche de glissement comprend entre 3 et 7 % en volume de PFA.

6. Matériau composite de palier à glissement selon l'une quelconque des revendications précédentes, **caractérisé en ce que** le matériau de la couche de glissement comprend entre 3 et 6 % en volume de PPSO₂.

7. Matériau composite de palier à glissement selon la revendication 6, **caractérisé en ce que** le matériau de la couche de glissement comprend entre 4 et 6 % en volume de PPSO₂.
